# EUROPEAN PATENT SPECIFICATION

(11) **EP 1 242 983 B1**
(45) Date of publication and mention of the grant of the patent: **10.09.2003**
(21) Application number: 00990124.0
(22) Date of filing: 01.12.2000
(51) Int. Cl.: G07F 19/00, H04M 17/00, G07F 7/00

(54) **A SYSTEM FOR RECHARGING A PREPAID VALUE IN RESPECT OF A TELEPHONE CONNECTION**
SYSTEM ZUM LADEN EINES VORBEZAHLTEN WERTES ÜBER EINE TELEFONVERBINDUNG
SYSTEME DE RECHARGE D'UNE VALEUR PREPAYEE DANS LE CADRE D'UNE CONNEXION TELEPHONIQUE

(30) Priority: 02.12.1999 NL 1013732
(43) Date of publication of application: 25.09.2002
(73) Proprietor: A.I.M. B.V., 3315 NG Dordrecht (NL); Rissema, Willem, 3311 ES Dordrecht (NL)
(72) Inventor: RISSEMA, Willem, NL-3311 ES Dordrecht (NL); SNIJDER, Theodorus, Arie, Jan, NL-2131 NC Hoofddorp (NL)
(74) Representative: de Vries, Johannes Hendrik Fokke
(86) International application number: NL0000882
(87) International publication number: WO01048716

(56) References cited:
- EP-A- 0 698 987
- WO-A-96/41462
- WO-A-98/25237
- WO-A-98/47112
- DE-A- 4 412 727

## Description

The invention relates to a system for recharging a prepaid value in respect of a telephone connection with various communication service providers via a communication network, comprising a number of terminals for recharging a prepaid value, a central processing unit and a number of service units, wherein the terminals are capable of setting up a connection with the central processing unit via the communication network.

EP-A-0 590 861 discloses a system wherein a consumer can obtain and pay for services via a telephone. First a connection is set up via a telephone network with a central processing unit comprising a database, wherein the consumer's credit card number and possibly an identification code are verified, after which the central processing unit passes on an authorisation code to a vendor and a direct connection is set up between the consumer and the vendor via the telephone network.

Systems of this kind are furthermore disclosed in EP-A-0 618 539 and WO 94/11849. With the system known from the latter publication, GSM telephones are used as terminals, with the code stored in the SIM card being used for consumer identification.

NL-C- 1 004 235 finally discloses a system of this kind wherein various kinds of service units are connected to the central processing unit, as a result of which varying services can be offered to the consumer via a terminal.

Although these prior art systems make it possible to obtain and pay for services via a communication network, such as the public telephone network, all prior art systems have this drawback that the transaction time, that is, the time required for making the payment and obtaining the service, is comparatively long, and the consumer is required to carry out many operations. Moreover, the prior art systems are relatively complicated.

It is a well-known fact that it is possible to recharge so-called pre-paid values with various providers of mobile telephone networks by buying a telephone card at a shop, on which card a concealed code number is present, which can be uncovered after the purchase of the telephone card. This code number must be input on the consumer's own mobile telephone after dialling a special number. Via said special number a connection is set up with the provider of the telephone network, and after receipt of the message containing the code number the prepaid value is recharged with the amount in question in a data file of the provider's computer. The distribution of such prepaid telephone cards in large numbers over several sales outlets is a time-consuming activity which involves a relatively great deal of expense. In addition, the presence of large stocks of such telephone cards makes the sales outlet a possible target for theft. The drawback of keeping a small stock of telephone cards is that this stock will be sold out more or less regularly, so that the service to the consumer will be less than satisfactory and both the vendor and the telephone company will lose income. The prepaid value may also be used for making other payments by means of a mobile phone.

WO9641462 and WO9847112 disclose systems for recharging a prepaid value of the kind referred to in the introduction, wherein a receipt is issued for the prepaid value. With these prior art systems the consumer makes a payment to the central processing unit via a terminal and the communication network, after which the central processing unit verifies the payment and instructs the terminal to print a receipt carrying a specific code number. By means of this code number the consumer can then recharge his prepaid value in the same manner as with the aforesaid telephone cards by dialling a specific number. WO9877112 furthermore discloses a system wherein the central processing unit can communicate with a service unit of a communication service provider so as to retrieve information on a specific prepaid value. The recharging of a prepaid value requires a complex exchange of messages between the terminal, the central processing unit and the service unit. The prior art systems are complicated and the consumer is required to carry out many operations. In addition, the prepaid value can only be recharged with predetermined amounts.

Consequently, there is a great need for a simple system of the kind referred to in the introduction, which is suitable for recharging a balance of a prepaid value with any desired amount.

The object of the invention is to provide a system of the above kind that supplies this need.

In order to accomplish that objective, the system according to the invention is characterized in that each terminal is capable of delivering to the central processing unit a payment message including a recharge of the prepaid value, a telephone number in respect of which the recharge is requested, and possibly a service provider code, wherein the central processing unit selects the service unit of the associated communication service provider on the basis of the telephone number included in the payment message or the service provider code, and informs the selected service unit of the recharge of the prepaid value.

In this manner a system is obtained by means of which the consumer can recharge a prepaid value with any desired amount in a simple and secure manner, whilst there is no need for sales outlets to keep stocks having a great commercial value. In principle the consumer can recharge his prepaid value twenty-four hours a day. Furthermore the system has the advantage that when the consumer changes telephone companies, this will not lead to a change in the manner of payment by the consumer, so that such a change can take place in a way which is easy and secure for the consumer.

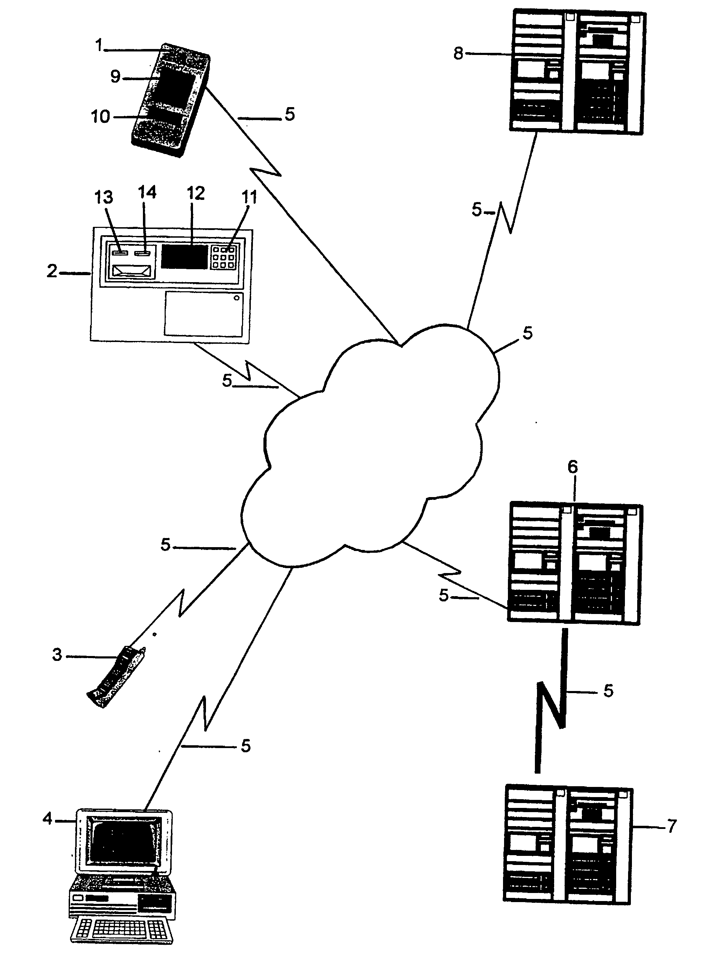

The invention will now be explained in more detail with reference to the drawing, which is a very schematic view of an embodiment of the system according to the invention.

The illustrated system is in particular arranged for recharging a prepaid value in respect of a telephone connection with various communication service providers, in particular for recharging a prepaid value of a mobile telephone connection. To this end the system comprises a plurality of terminals, four possible embodiments 1, 2, 3, 4 of which are shown in the drawing. Terminals 1 - 4, which will be present in great numbers in a practical embodiment of the system, are capable of setting up a connection with a computer system or central processing unit 6 via a communication network 5. The central processing unit 6 is capable of setting up a connection, via communication network 5, with the computer system or service units 7 of various providers of mobile telephone networks. For the sake of clarity only one service UNIT 7 is shown in the drawing. It is noted that the communication network 5 may comprise several landline telephone networks, cellular telephone networks, computer networks and landline and/or cellular connections. It is possible to use a fast land-line connection, for example, in particular between central processing unit 6 and service units 7, for handling the data communication traffic in a quick and secure manner.

The drawing finally shows a verification unit 8 of a recognized agency for carrying out electronic payments. In the Netherlands this could be Interpay. For certain payments, which are effected via the communication network within the framework of the system according to the invention, a connection can be set up with verification unit 8, as will be explained in more detail yet.

Terminal 1 is arranged for use in a shop or other sales outlet, wherein the salesperson carries out at least part of the operations for recharging the prepaid value. Terminal 1 comprises a central processing unit (not shown), a keypad 9 and preferably a display 10. When a consumer wishes to recharge the prepaid value of his mobile telephone, he pays the salesperson the amount by which he wishes to recharge his prepaid value. Via the keypad the salesperson inputs a PIN code, the amount and the telephone number in respect of which the prepaid value must be recharged. The processing unit of the terminal 2 verifies the PIN code. After verification the terminal converts this data into a payment message and sets up a connection with the central processing unit 6 via network 5. The payment message is preferably delivered to the central processing unit 6 after being encoded by means of a suitable cryptographic algorithm. Depending on the type of terminal 1, the payment message can be transmitted via a landline connection or in the form of a GMS (SMS) message.

It is noted that the telephone number in respect of which the prepaid value is to be recharged can also be input by the consumer himself via keypad 9, if desired. Terminal 1 may comprise two units, at least one of which comprises a keypad. The first unit may be detachably connected to the second unit, which is in the form of a docking base, with display 10 forming part of the first unit. When the consumer has paid for recharging the prepaid value, the salesperson inputs his identification code and the amount via the keypad. The amount appears on display 10 and the salesperson hands over the unit to the consumer, who inputs the telephone number in respect of which the prepaid value is to be recharged. The payment message is composed and transmitted, for example by depressing a transmission button.

In a preferred embodiment terminal 1 comprises as a third unit a transceiver including a GSM modem, which transceiver is capable of wireless communication with said docking base. For security reasons said third unit is disposed at a location which is not accessible to the public. The payment message is transmitted via said third unit and the GSM modem. Preferably, said payment message includes a terminal identification code. If terminal 1 comprises two or more units, this terminal identification code will preferably comprise a subcode for each unit. Central processing unit 6 can verify the source of a payment message by means of the terminal identification code, whereby the central processing unit can also verify the subcodes. This provides a safeguard against combining the first and the second unit with another GSM modem.

After receipt of the payment message by the central processing unit 6, said message is processed once it has been decoded, whereby the central processing unit is capable of identifying, by means of the terminal identification code, the sales outlet at which terminal 1 is present. The central processing unit determines from the telephone number which service provider the consumer is using for his telephone connection and the central processing unit sets up a connection with the associated service unit 7. Central processing unit 6 passes on the telephone number and the amount with which the prepaid value is to be recharged to service unit 7. In service unit 7 the prepaid value is immediately recharged with this amount. Service unit 7 will for example send a confirmation of the recharge to the processing unit 6. The central processing unit 6 can then send a confirmation message to terminal 1, from which the payment message was received. This confirmation can be displayed on display 10 and/or be communicated to the consumer in another manner.

In the case of the above-described terminal 1, the terminal for the central processing unit 6 can be recognized as a telephone, so that verification of the telephone number of terminal 1 constitutes a first security measure. Then the processing unit 6 verifies the terminal identification code and thus, if applicable, also the subcode of the terminal units. The processing unit 6 furthermore verifies the combination of the terminal identification codes and the telephone number. The processing unit 6 is arranged in such a manner that only payment messages from telephone numbers that are known and that contain correct terminal identification codes will be accepted. Each terminal assigns a session sequence number to each payment message, which is stored by the central processing unit 6, as a result of which the central processing unit can establish whether any transactions are missing.

It is noted that it is possible to select via terminal 1 the service provider with which the prepaid value is to be recharged, if desired. The central processing unit 6 does not need to select the service provider by means of the telephone number in that case.

Finally, the processing unit 6 updates several data files for storing the payments to be received from the sales outlets and/or the payments to be made to the various service providers. The PIN codes are also stored so that it is always possible to determine which persons have been involved in the transactions stored.

Terminal 2 can be disposed are various desired locations. Said terminal 2 comprises a processing unit (not shown), a keypad 11 for inputting an amount with which the prepaid value is to be recharged, and an associated telephone number, a display 12, a money insertion unit 13 and an electronic payment unit 14. The money insertion unit 13 may be adapted for payment with paper money and with coins. The electronic payment unit 14 is intended for making electronic payments by means of a smart card (switch card). It is furthermore possible to use a touch screen instead of keypad 11 as the input unit. The input unit may also comprise a voice response and voice recognition system.

The consumer can indicate via keypad 11 that he wishes to recharge the prepaid value in respect of his telephone connection, wherein he inputs the telephone number in question and wherein he can select any desired amount. Payment can take place by means of cash money, via money insertion unit 13, or by means of a smart card via electronic payment unit 14. In the latter case the consumer inserts his smart card, after which terminal 2 sets up a connection with verification unit 8 via network 5. Terminal 2 thereby indicates in its communication with the verification unit 8 that payment is to take place to the administrator of the central processing unit 8. The electronic payment further takes place in the usual manner. After the payment has been authorized, the verification unit 8 sends terminal 2 an authorization message in a usual manner. After receipt of said authorization message, terminal 2 composes a payment message which includes the telephone number and the amount with which the prepaid value is to be recharged, and possibly also the authorization message. Said payment message is then transmitted to the central processing unit 6 in encrypted form via network 5. The further handling of the payment message takes place in the same manner as when a payment message is received from terminal 1, and in conclusion central processing unit 6 sends a confirmation message to terminal 2.

It is noted that terminals 1 and 2 may include a device for printing a receipt confirming the transaction that has just been effected, if desired.

Terminal 3 is made up of the mobile telephone of a consumer who wishes to recharge his prepaid value. According to the system disclosed herein, the consumer can dial a special number for this purpose, which results in a connection with the central processing unit 6 being set up via network 5. Central processing unit 6 recognizes the telephone number and transmits a request to the terminal to state an account number from which the amount is to be transferred, as well as identification data (pin code) and the amount with which the prepaid value is to be recharged. The communication from central processing unit 6 to terminal 3 can take place by means of SMS messages, for example. Terminal 3 converts the data into a payment message, which is transmitted to the central processing unit 6. Central processing unit 6 sets up a connection with verification unit 8 in order to have the payment verified, and after the authorization message has been received, the further processing of the payment message from terminal 3 takes place in the same manner as with terminal 1. In conclusion, a confirmation message is sent to terminal 3 again.

Terminal 4 is a PC, by means of which a connection with a website can be set up via the Internet, at which website the consumer can subsequently ask for a recharge of the prepaid value in a manner that is usual with e-commerce. The further handling of the received payment message by central processing unit 6 takes place in the above-described manner.

It will be apparent from the foregoing that the invention discloses a system for obtaining and paying for a pre-paid value by means of which consumers who may have a telephone connection with various providers can recharge their prepaid value quickly and easily in any desired manner and in principle at any desired moment. Terminals 1 - 4 deliver a payment message to central processing unit 6, which payment message in any case includes the telephone number and the amount with which the prepaid value is to be recharged. Preferably, the payment message also includes a sender identification, so that the central processing unit can register via which terminal payment has taken place. The central processing unit 6 can identify by means of the telephone number the provider with which the consumer in question has a telephone connection, after which the central processing unit informs the service unit 7 of the provider in question via network 5 what telephone number is to be recharged with what amount. For the consumer, the central processing unit 6 is present in a way that is fully transparent to him and it seems as if he is directly obtaining a recharge of the prepaid value from his own provider of telephone services. The central processing unit 6 furthermore provides protection against unauthorized use by verifying the telephone number of the terminal from which the payment message is being received, by verifying the terminal identification code, by verifying whether the telephone number and the terminal identification code correspond and by recording session numbers.

The invention is not limited to the embodiments described in the foregoing, which can be varied in several ways without departing from the scope of the claims.

## Claims

1. A system for recharging a prepaid value in respect of a telephone connection with various communication service providers via a communication network, comprising a number of terminals for recharging a prepaid value, a central processing unit and a number of service units, wherein the terminals are capable of setting up a connection with the central processing unit via the communication network, **characterized in that** each terminal is capable of delivering to the central processing unit a payment message including a recharge of the prepaid value, a telephone number in respect of which the recharge is requested, and possibly a service provider code, wherein the central processing unit selects the service unit of the associated communication service provider on the basis of the telephone number included in the payment message or the service provider code, and informs the selected service unit of the recharge of the prepaid value.

2. A system according to claim 1, wherein said payment message also includes a terminal identification code, and wherein the central processing unit verifies said terminal identification code, and wherein only payment messages from a terminal with a known terminal identification code are processed.

3. A system according to claim 1 or 2, wherein at least one terminal is arranged for use at a sales outlet, wherein the terminal comprises a processing unit and a keypad for inputting a PIN code, an amount and the telephone number, wherein the processing unit composes a payment message from the input data and delivers said payment message to the central processing unit via the communication network.

4. A system according to claim 3, wherein the terminal comprises at least two units, wherein each unit has a subcode and wherein the terminal identification code is composed of said subcodes, wherein the central processing unit verifies the terminal identification code and the composition thereof.

5. A system according to any one of the preceding claims, wherein the terminal delivers the payment message via a telephone connection, wherein the central processing unit verifies the telephone number of the terminal and only payment messages from a terminal having a telephone number that is known are processed, wherein preferably the central processing unit verifies the combination of telephone number and terminal identification code.

6. A system according to claims 4 and 5, wherein a unit comprises a transceiver with a modem, which is capable of wireless communication with the other unit(s).

7. A system according to any one of the preceding claims, wherein at least one terminal comprises a processing unit, an input unit for inputting an amount and a telephone number, a display, a money insertion unit and/or an electronic payment unit for payment with a smart card or the like, wherein the processing unit composes the payment message after receipt of a payment via the money insertion unit and/or the electronic payment unit.

8. A system according to claim 7, wherein the electronic payment unit is capable of communication, via the communication network, with a verification unit for electronic payments for making a payment to the administrator of the central processing unit, wherein the electronic payment unit delivers an authorization message that it has received from the verification unit to the processing unit, and the processing unit delivers the payment message to the central processing unit after receipt of the authorization message.

9. A system according to any one of the preceding claims, wherein a mobile telephone can function as a terminal by dialling a predetermined service number of the central processing unit for the purpose of recharging the prepaid value, wherein the central processing unit requests the user via the telephone to input an account number, identification codes and an amount, and wherein the central processing unit has the verification unit verify the payment after receipt of said data, wherein the central processing unit selects the service unit of the associated communication service provider on the basis of the telephone number that makes the call after receipt of an authorization message from the verification unit, and transmits the recharge of the prepaid value to the selected service unit.

10. A system according to any one of the preceding claims, wherein the central processing unit, after having transmitted the telephone number and the recharge of the prepaid value to the selected service unit, sends a confirmation message to the terminal from which the payment message was received, wherein the central processing unit registers the received payments separately per service provider in a data file.

11. A system according to any one of the preceding claims, wherein each terminal assigns a session sequence number to each payment message, and wherein the central processing unit verifies and stores said session sequence number.

12. A system according to any one of the preceding claims, wherein the terminals and the central processing unit encode the message with a suitable cryptographic algorithm prior to transmission.

## Patentansprüche

1. System zum Aufladen eines im Voraus zahlbaren Festbetrags in Verbindung mit einer Telefonverbindung mit verschiedenen Anbietern von Kommunikationsdiensten über ein Kommunikationsnetzwerk mit einer Anzahl von Endgeräten zum Aufladen eines im Voraus zahlbaren Festbetrags, einer zentralen Vermittlungseinheit und einer Anzahl von Diensteinheiten, wobei die Endgeräte zum Aufbau einer Verbindung mit der zentralen Vermittlungseinheit über das Kommunikationsnetzwerk fähig sind, **dadurch gekennzeichnet, dass** jedes Endgerät zum Senden einer Zahlungsnachricht mit einer Aufladung des im Voraus zahlbaren Festbetrags, einer Telefonnummer, für die die Aufladung angefordert wird, und möglicherweise einem Dienstanbietercode an die zentrale Vermittlungseinheit fähig ist, wobei die zentrale Vermittlungseinheit auf der Grundlage der Telefonnummer, die als Teil der Zahlungsnachricht gesendet wurde, oder des Dienstanbietercodes die Diensteinheit des verbundenen Anbieters von Kommunikationsdiensten auswählt und die gewählte Diensteinheit über die Aufladung des im Voraus zahlbaren Festbetrags informiert.

2. System nach Anspruch 1, wobei die Zahlungsnachricht auch einen Identifikationscode für das Endgerät umfasst und wobei die zentrale Vermittlungseinheit den Identifikationscode des Endgeräts verifiziert und wobei nur Zahlungsnachrichten von einem Endgerät mit bekanntem Identifikationscode des Endgeräts verarbeitet werden.

3. System nach Anspruch 1 oder 2, wobei wenigstens ein Endgerät zur Verwendung an einer Verkaufsstelle eingerichtet ist, wobei das Endgerät eine Verarbeitungseinheit und eine Tastatur zur Eingabe eines PIN-Codes, eines Betrags und der Telefonnummer umfasst, wobei die Verarbeitungseinheit eine Zahlungsnachricht aus den Eingabedaten zusammenstellt und die Zahlungsnachricht über das Kommunikationsnetzwerk an die zentrale Vermittlungseinheit sendet.

4. System nach Anspruch 3, wobei das Endgerät wenigstens zwei Einheiten umfasst, wobei jede Einheit einen Untercode hat und wobei der Identifikationscode des Endgeräts aus diesen Untercodes zusammengesetzt ist, wobei die zentrale Vermittlungseinheit den Identifikationscode des Endgeräts und dessen Zusammenstellung verifiziert.

5. System nach einem der vorstehenden Ansprüche, wobei das Endgerät die Zahlungsnachricht über eine Telefonverbindung sendet, wobei die zentrale Vermittlungseinheit die Telefonnummer des Endgeräts verifiziert und nur Zahlungsnachrichten von einem Endgerät mit bekannter Telefonnummer verarbeitet werden, wobei die zentrale Vermittlungseinheit vorzugsweise die Kombination aus Telefonnummer und Identifikationscode des Endgeräts verifiziert.

6. System nach Ansprüchen 4 und 5, wobei eine Einheit einen Transceiver mit einem Modem aufweist, das zur drahtlosen Kommunikation mit der/den anderen Einheit(en) fähig ist.

7. System nach einem der vorstehenden Ansprüche, wobei wenigstens ein Endgerät eine Verarbeitungseinheit, eine Eingabeeinheit zur Eingabe eines Betrags und einer Telefonnummer, eine Anzeige, eine Geldeinwurfeinheit und/oder eine Einheit für elektronische Zahlungen mit einer Smartcard oder dergleichen aufweist, wobei die Verarbeitungseinheit die Zahlungsnachricht nach Empfang einer Zahlung durch die Geldeinwurfeinheit und/oder die Einheit für elektronische Zahlungen zusammenstellt.

8. System nach Anspruch 7, wobei die Einheit für elektronische Zahlungen über das Kommunikationsnetzwerk zur Kommunikation mit einer Verifizierungseinheit für elektronische Zahlungen zur Durchführung einer Zahlung an den Administrator der zentralen Vermittlungseinheit fähig ist, wobei die Einheit für elektronische Zahlungen eine von der Verifizierungseinheit erhaltene Berechtigungsnachricht an die Verarbeitungseinheit sendet und die Verarbeitungseinheit nach Empfang der Berechtigungsnachricht die Zahlungsnachricht an die zentrale Vermittlungseinheit sendet.

9. System nach einem der vorstehenden Ansprüche, wobei ein Mobiltelefon durch Anwählen einer vorbestimmten Dienstnummer der zentralen Vermittlungseinheit zum Zwecke des Aufladens des im Voraus zahlbaren Festbetrags als Endgerät funktionieren kann, wobei die zentrale Vermittlungseinheit den Benutzer über die Telefonnummer auffordert, eine Kontonummer, Identifikationscodes und einen Betrag einzugeben, und wobei die zentrale Vermittlungseinheit die Verifizierungseinheit nach Empfang dieser Daten zur Verifizierung der Zahlung veranlasst, wobei die zentrale Vermittlungseinheit nach Empfang der Berechtigungsnachricht von der Verifizierungseinheit auf der Grundlage der Telefonnummer, die den Anruf eingeleitet hat, die Diensteinheit des verbundenen Anbieters von Kommunikationsdiensten auswählt und die Aufladung des im Voraus zahlbaren Festbetrags an die gewählte Diensteinheit übermittelt.

10. System nach einem der vorstehenden Ansprüche, wobei die zentrale Vermittlungseinheit nach Übermittlung der Telefonnummer und dem Aufladen des im Voraus zahlbaren Festbetrags an die gewählte Diensteinheit eine Bestätigungsnachricht an das Endgerät sendet, von dem die Zahlungsnachricht empfangen wurde, wobei die zentrale Vermittlungseinheit die empfangenen Zahlungen getrennt nach Dienstanbieter in einer Datei erfasst.

11. System nach einem der vorstehenden Ansprüche, wobei jedes Endgerät jeder Zahlungsnachricht eine Sitzungsfolgenummer zuweist und wobei die zentrale Vermittlungseinheit diese Sitzungsfolgenummer verifiziert und speichert.

12. System nach einem der vorstehenden Ansprüche, wobei die Endgeräte und die zentrale Vermittlungseinheit die Nachricht vor der Übermittlung mit einem geeigneten kryptografischen Algorithmus codieren.

## Revendications

1. Un système pour recharger une valeur prépayée en relation avec une connexion téléphonique avec divers fournisseurs de services de communication par l'intermédiaire d'un réseau de communication, comprenant un certain nombre de terminaux pour recharger une valeur prépayée, une unité de traitement centrale et un certain nombre d'unités de service, dans lequel les terminaux sont capables d'établir une connexion avec l'unité de traitement centrale par l'intermédiaire du réseau de communication, **caractérisé en ce que** chaque terminal est capable de fournir à l'unité de traitement centrale un message de paiement incluant une recharge de la valeur prépayée, un numéro de téléphone pour lequel la recharge est demandée, et éventuellement un code de fournisseur de service, dans lequel l'unité de traitement centrale sélectionne l'unité de service du fournisseur de service de communication associé sur la base du numéro de téléphone inclus dans le message de paiement ou du code de fournisseur de service, et informe l'unité de service sélectionnée de la recharge de la valeur prépayée.

2. Un système selon la revendication 1, dans lequel le message de paiement comprend également un code d'identification de terminal, et dans lequel l'unité de traitement centrale vérifie le code d'identification de terminal, et dans lequel seuls des messages de paiement provenant d'un terminal avec un code d'identification de terminal connu sont traités.

3. Un système selon la revendication 1 ou 2, dans lequel au moins un terminal est adapté pour l'utilisation à un point de vente, dans lequel le terminal comprend une unité de traitement et un clavier numérique pour saisir un code de numéro d'identification personnel, un montant et le numéro de téléphone, et dans lequel l'unité de traitement compose un message de paiement à partir des données d'entrée et fournit ce message de paiement à l'unité de traitement centrale par l'intermédiaire du réseau de communication.

4. Un système selon la revendication 3, dans lequel le terminal comprend au moins deux unités, dans lequel chaque unité a un sous-code et dans lequel le code d'identification de terminal est composé de ces sous-codes, et dans lequel l'unité de traitement centrale vérifie le code d'identification de terminal et sa composition.

5. Un système selon l'une quelconque des revendications précédentes, dans lequel le terminal fournit le message de paiement par l'intermédiaire d'une connexion téléphonique, dans lequel l'unité de traitement centrale vérifie le numéro de téléphone du terminal et seuls des messages de paiement provenant d'un terminal ayant un numéro de téléphone qui est connu sont traités, et dans lequel l'unité de traitement centrale vérifie de préférence la combinaison du numéro de téléphone et du code d'identification de terminal.

6. Un système selon les revendications 4 et 5, dans lequel une unité comprend un émetteur-récepteur avec un modem, qui est capable d'effectuer une communication sans fil avec l'autre ou les autres unités.

7. Un système selon l'une quelconque des revendications précédentes, dans lequel au moins un terminal comprend une unité de traitement, une unité de saisie pour saisir un montant et un numéro de téléphone, un dispositif de visualisation, une unité d'insertion de monnaie et/ou une unité de paiement électronique pour le paiement avec une carte à puce ou autres, et dans lequel l'unité de traitement compose le message de paiement après la réception d'un paiement par l'intermédiaire de l'unité d'insertion de monnaie et/ou de l'unité de paiement électronique.

8. Un système selon la revendication 7, dans lequel l'unité de paiement électronique est capable de communiquer, par l'intermédiaire du réseau de communication, avec une unité de vérification pour des paiements électroniques, pour effectuer un paiement à l'administrateur de l'unité de traitement centrale, dans lequel l'unité de paiement électronique fournit à l'unité de traitement un message d'autorisation qu'elle a reçu de l'unité de vérification, et l'unité de traitement fournit le message de paiement à l'unité de traitement centrale après la réception du message d'autorisation.

9. Un système selon l'une quelconque des revendications précédentes, dans lequel un téléphone mobile peut fonctionner comme un terminal en composant un numéro de service prédéterminé de l'unité de traitement centrale dans le but de recharger la valeur prépayée, dans lequel l'unité de traitement centrale demande à l'utilisateur, par le téléphone, de saisir un numéro de compte, des codes d'identification et un montant, et dans lequel l'unité de traitement centrale ordonne à l'unité de vérification de vérifier le paiement après la réception des données précitées et dans lequel l'unité de traitement centrale sélectionne l'unité de service du fournisseur de service de communication associé, sur la base du numéro de téléphone qui effectue l'appel, après la réception d'un message d'autorisation provenant de l'unité de vérification, et elle émet vers l'unité de service sélectionnée la recharge de la valeur prépayée.

10. Un système selon l'une quelconque des revendications précédentes, dans lequel après avoir émis le numéro de téléphone et la recharge de la valeur prépayée, vers l'unité de service sélectionnée, l'unité de traitement centrale envoie un message de confirmation au terminal à partir duquel le message de paiement a été reçu, et dans lequel l'unité de traitement centrale enregistre les paiements reçus de manière séparée pour chaque fournisseur de service, dans un fichier de données.

11. Un système selon l'une quelconque des revendications précédentes, dans lequel chaque terminal assigne un numéro de séquence de session à chaque message de paiement, et dans lequel l'unité de traitement centrale vérifie et stocke ce numéro de séquence de session.

12. Un système selon l'une quelconque des revendications précédentes, dans lequel les terminaux et l'unité de traitement centrale codent le message avec un algorithme cryptographique approprié, avant l'émission.
